(19) Europäisches Patentamt
European Patent Office
Office européen des brevets

(11) **EP 1 939 505 B1**

(12) **FASCICULE DE BREVET EUROPEEN**

(45) Date de publication et mention
de la délivrance du brevet:
**31.08.2011 Bulletin 2011/35**

(51) Int Cl.:
***F16K 3/34*** *(2006.01)*     ***F16K 5/10*** *(2006.01)*

(21) Numéro de dépôt: **07291566.3**

(22) Date de dépôt: **19.12.2007**

(54) **Robinet d'alimentation en gaz**

Gaszufuhrhahn

Gas-supply tap

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.12.2006 FR 0656017**

(43) Date de publication de la demande:
**02.07.2008 Bulletin 2008/27**

(73) Titulaire: **FagorBrandt SAS**
**92500 Rueil Malmaison (FR)**

(72) Inventeurs:
• **Bonnafe, Jean-Pascal**
**45160 Olivet (FR)**
• **Petit, Johann**
**45730 Saint Benoît sur Loire (FR)**

(74) Mandataire: **Stankoff, Hélène**
**SANTARELLI**
**14 avenue de la Grande Armée**
**75017 Paris (FR)**

(56) Documents cités:
**WO-A-01/33118**     **DE-A1- 19 807 503**
**JP-A- 55 076 262**

## Description

La présente invention concerne un robinet d'alimentation en gaz, notamment pour alimenter un brûleur de table à gaz domestique.

De manière générale, la présente invention concerne la régulation du débit du gaz dans un robinet d'alimentation.

Généralement, la régulation du débit de gaz dans un robinet est réalisée en modifiant la section de passage du gaz au travers d'une chambre de passage de gaz s'étendant entre une canalisation d'arrivée de gaz et une canalisation de sortie de gaz en direction d'un brûleur.

On connaît ainsi dans le document US 4,137,945 une pièce de régulation du débit de gaz montée en rotation dans une chambre de passage de gaz en regard d'un orifice d'arrivée de gaz. Suivant la position angulaire de la pièce de régulation, deux positions de régulation sont définies, l'une correspondant à un faible débit et l'autre à un débit important de gaz.

Toutefois, ce type de pièce de régulation n'est pas suffisant pour obtenir plusieurs débits de gaz progressifs sur une plage de rotation de la pièce de régulation et obtenir ainsi un grand nombre de puissances de cuisson différentes et bien distinctes.

Par ailleurs, suivant le type de brûleur alimenté par un tel robinet, il est généralement utile d'obtenir des puissances de fonctionnement distinctes, tant pour des petits brûleurs que pour des brûleurs de grande taille.

En particulier, il est important de pouvoir obtenir différentes positions intermédiaires au niveau des faibles débits de gaz pour des brûleurs de faible puissance.

Le document WO 01/33118 décrit une pièce de régulation de gaz permettant une variation linéaire entre une partie angulaire de cette pièce et le débit de gaz.

Le document JP 55 076 22 décrit une pièce de régulation avec une gorge de passage s'étendant sur 90°.

La présente invention a pour but de résoudre les inconvénients précités et de proposer un robinet d'alimentation en gaz permettant d'obtenir une régulation fine tant pour des faibles débits que des débits importants de gaz.

À cet effet, la présente invention concerne un robinet d'alimentation en gaz comprenant un corps de robinet comportant une chambre de passage de gaz entre une canalisation d'arrivée de gaz et une canalisation de sortie de gaz et une pièce de régulation du débit de gaz montée en rotation dans la chambre de passage de gaz en regard d'au moins un orifice de passage de gaz, la pièce de régulation comportant des moyens de passage de gaz destinés à venir en vis-à-vis dudit au moins un orifice de passage de gaz de ladite chambre, lesdits moyens de passage de gaz définissant avec ledit au moins un orifice de passage de gaz une section de passage de gaz variable selon une progression continue sur une plage de rotation de ladite pièce de régulation.

Afin d'obtenir plusieurs puissances de cuisson bien distinctes pour chaque brûleur, tant dans des faibles débits que pour des débits importants, selon l'invention, la section de passage de gaz est variable selon une progression sensiblement parabolique sur une plage de rotation de ladite pièce de régulation d'au moins 270°.

Grâce à cette pièce de régulation particulière, il est possible d'obtenir plusieurs débits de gaz progressifs sur une plage de rotation de la pièce de régulation, et ainsi plusieurs puissances de cuisson distinctes, l'évolution du débit de gaz étant plus lente sur une première partie de la plage de rotation de la pièce de régulation et plus rapide sur une seconde partie de la plage de rotation de la pièce de régulation.

Il est possible d'avoir une progression lente du débit de gaz pour des faibles débits de gaz, puis, au delà d'une certaine position angulaire de la pièce de régulation, une croissance plus rapide pour atteindre des débits de gaz plus importants, et ainsi une puissance de cuisson supérieure.

Cette même pièce de régulation peut être utilisée pour des brûleurs de grande taille, dits brûleurs grand rapide, et pour des brûleurs de petites tailles, dits brûleurs auxiliaires.

Selon une caractéristique avantageuse de l'invention, les moyens de passage de gaz sont adaptés à être disposés en regard d'au moins deux orifices de passage de gaz agencés dans une paroi de la chambre de passage de gaz.

Il est ainsi possible de diminuer les dispersions dans le débit de gaz dues à un décalage de positionnement de la pièce de régulation et ainsi des moyens de passage de gaz en vis-à-vis des orifices de passage de gaz de la chambre.

Selon un mode de réalisation pratique de l'invention, la pièce de régulation comporte une portion sensiblement en forme de disque destinée à venir en contact plan contre plan avec une paroi plane de ladite chambre de passage de gaz pourvue d'au moins un orifice de passage de gaz, ladite portion sensiblement en forme de disque comprenant une série d'orifices disposés suivant un arc de cercle et de taille croissante suivant un sens de rotation et une rainure disposée suivant un arc de cercle et de taille croissante suivant ledit sens de rotation, ladite série d'orifices et ladite rainure étant adaptées à venir en vis-à-vis dudit au moins un orifice de passage de gaz en fonction de la position angulaire de ladite pièce de régulation.

Ainsi, la série d'orifices permet d'obtenir différents débits de gaz pour les faibles débits. La rainure prolongeant cette série d'orifices permet d'autre part d'obtenir différentes valeurs de débit pour des valeurs de débit moyen et élevé, de l'ordre de 50 l/h en gaz butane et 75 l/h en gaz naturel.

Selon un autre mode de réalisation de l'invention, la pièce de régulation est de forme tronconique et adaptée à venir en contact cône contre cône avec une paroi tronconique de ladite chambre de passage de gaz pourvue d'au moins un orifice de passage de gaz, au moins une face d'extrémité de ladite pièce de régulation de forme tronconique présentant une forme d'hélicoïde par rapport à un axe de rotation de ladite pièce de régulation et l'arête du tronc de cône au niveau de cette face d'extrémité s'étendant en regard dudit au moins un orifice de passage de gaz.

Il est ainsi possible, suivant la position angulaire de la pièce de régulation de forme tronconique dans la chambre de passage de gaz de forme tronconique complémentaire, de modifier les dimensions du passage de gaz grâce au recouvrement plus ou moins important de l'orifice de passage de gaz par une portion d'extrémité de la pièce de régulation adjacente à la face d'extrémité en forme d'hélicoïde.

Ce type de pièce de régulation permet d'obtenir un grand nombre de puissances de fonctionnement d'un brûleur alimenté par un tel robinet, tant pour des faibles débits que pour des débits de gaz élevés.

D'autres particularités et avantages de l'invention apparaîtront encore dans la description ci-après.

Aux dessins annexés, donnés à titre d'exemples non limitatifs :

- la figure 1 est une vue en perspective d'un robinet d'alimentation en gaz conforme à un premier mode de réalisation de l'invention ;
- la figure 2 est une vue en section transversale du robinet d'alimentation en gaz de la figure 1 ;
- la figure 3 est une vue en perspective d'une pièce de régulation mise en oeuvre dans le robinet d'alimentation en gaz de la figure 1 ;
- la figure 4 est une vue de face de la pièce de régulation de la figure 3 ;
- la figure 5 est une vue en perspective d'un robinet d'alimentation en gaz selon un second mode de réalisation de l'invention ;
- la figure 6 est une vue de face du robinet d'alimentation en gaz de la figure 5 ;
- la figure 7 est une vue en coupe selon la ligne VII-VII à la figure 6;
- la figure 8 est une vue en perspective d'une pièce de régulation mise en oeuvre dans le robinet d'alimentation en gaz de la figure 7 ;
- la figure 9 est une vue de côté de la pièce de régulation de la figure 8 ;
- la figure 10 est une vue analogue à la figure 7 illustrant un troisième mode de réalisation de l'invention ;
- la figure 11 est une vue en perspective d'une pièce de régulation mise en oeuvre dans le mode de réalisation illustré à la figure 10 ;
- la figure 12 est un schéma illustrant la coopération de la pièce de régulation de la figure 11 avec deux orifices de passage de gaz ; et
- les figures 13 à 15 illustrent des courbes de débit de gaz en fonction de la position angulaire de la pièce de régulation dans un robinet d'alimentation en gaz conforme à l'invention.

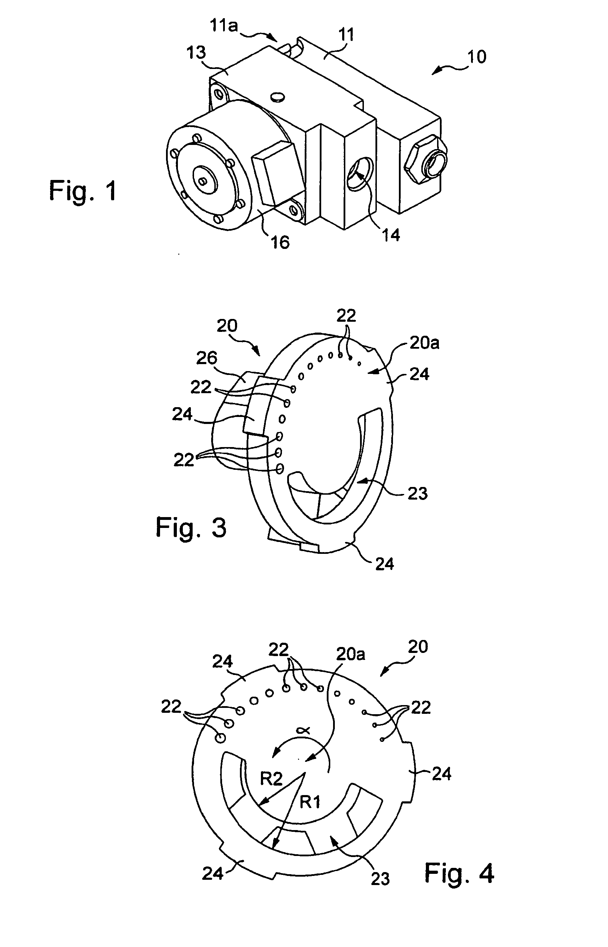

On va décrire tout d'abord en référence aux figures 1 à 4 un premier mode de réalisation d'un robinet d'alimentation en gaz conforme à l'invention.

Le robinet d'alimentation en gaz se présente sous la forme extérieure d'un carter compact adapté à être placé dans une table de cuisson.

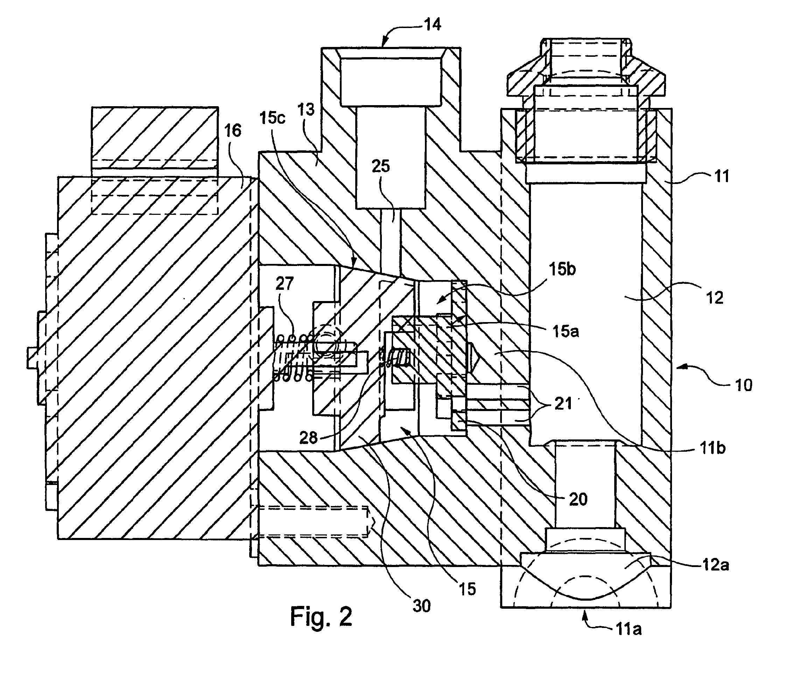

Le robinet 10 tel qu'illustré à la figure 1 comporte en particulier une première partie de carter 11 destinée à être raccordée à l'arrivée de gaz au niveau d'une extrémité 11a. Ce carter 11 comporte, comme bien illustré à la figure 2, un logement adapté à loger une électrovanne de sécurité 12 reliée à la carte électronique de commande de la table de cuisson.

Cette électrovanne 12 peut comporter un électroaimant et une pièce d'étanchéité 12a adaptée à fermer le passage d'arrivée de gaz 11a lorsque l'électroaimant n'est pas alimenté en courant. Le fonctionnement de cet organe de sécurité est connu et décrit notamment dans le document EP 1 094 276.

Une seconde partie de carter 13 est adaptée à être reliée à une sortie de gaz 14 en direction des brûleurs d'une table de cuisson.

A l'intérieur du corps de robinet au niveau du carter 13, une chambre de passage de gaz 15 est ménagée s'étendant ainsi entre une canalisation d'arrivée de gaz et une canalisation de sortie de gaz.

Cette chambre de passage de gaz est adaptée à loger, comme cela sera décrit plus en détails ci-après, une pièce de régulation du débit de gaz montée en rotation dans cette chambre 15. Un moteur 16 est associé au robinet d'alimentation en gaz pour permettre la rotation de cette pièce de régulation et ainsi la régulation du débit de gaz au travers de cette chambre de passage de gaz.

On utilise à titre d'exemple un moteur pas à pas rotatif permettant par exemple de réaliser quarante-huit pas par tour.

Ce pas de rotation correspond sensiblement à un déplacement angulaire de 7,5° du moteur rotatif.

Les montage et raccordement du robinet d'alimentation en gaz à une table de cuisson et aux canalisations d'arrivée et de sortie de gaz sont usuels et n'ont pas besoin d'être décrits plus avant ici.

On détaille ci-après en référence aux figures 2 à 4 une pièce de régulation mise en oeuvre dans le robinet tel qu'illustré à la figure 1.

Comme bien illustré à la figure 2, la pièce de régulation 20 est adaptée à venir en vis-à-vis d'un orifice de passage de gaz 21 ménagé dans une paroi 11b séparant te passage d'arrivée de gaz 11a et la chambre 15.

Ici, et de manière non limitative, deux orifices de passage de gaz 21 sont prévus et disposés en vis-à-vis de la pièce de régulation 20.

Ces orifices de passage de gaz correspondent ici à deux orifices d'arrivée de gaz dans la chambre de passage de gaz 15. Ces orifices 21 débouchent dans une paroi plane 15a de la chambre de passage de gaz 15 et peuvent être circulaires.

Ces orifices 21 permettant d'améliorer la précision de la régulation et la progressivité du débit variable de gaz, tout en s'affranchissant des jeux liés au montage de la pièce de régulation 20 en vis-à-vis de ces orifices 21.

Comme bien illustré sur les figures 3 et 4, la pièce de régulation 20 comporte une portion 20a sensiblement plane destinée à venir en contact plan contre plan avec la paroi plane 15a délimitant la chambre de passage de gaz 15.

Dans ce mode de réalisation tel qu'illustré à la figure 2, la chambre de passage de gaz 15 comporte différentes portions cylindriques et tronconiques coaxiales. La paroi plane 15a de la chambre de passage de gaz 15 définit ainsi une face d'extrémité d'une portion cylindrique 15b de la chambre de passage de gaz 15. Ainsi, la pièce de régulation logée dans cette portion cylindrique 15b et venant en contact avec la paroi plane 15a a sensiblement une forme de disque.

Cette pièce de régulation 20 comporte des moyens de passage de gaz destinés à venir en vis-à-vis avec les orifices 21 de passage de gaz. Ces moyens de passage de gaz sont adaptés à définir avec les orifices de passage de gaz 21 une section de passage de gaz variable sur une plage de rotation de la pièce de régulation 20.

Ici, l'aire de ladite section de passage varie suivant une progression sensiblement parabolique.

Dans ce mode de réalisation, la pièce de régulation 20 comporte ainsi sur la portion sensiblement en forme de disque 20a une série d'orifices 22 et une rainure 23 disposées à la périphérie de la face 20a de la pièce de régulation 20.

La série d'orifices 22 s'étend sur un arc de cercle, les orifices présentant une taille croissante sur cet arc de cercle dans un sens de rotation α tel qu'illustré par la flèche à la figure 4. La série d'orifices 22 s'étend ainsi à titre d'exemple non limitatif sur un secteur angulaire de la portion en forme de disque 20a compris entre 130 et 140°.

Afin d'obtenir une variation parabolique de la section de passage de gaz définie par ces orifices 22 venant en regard avec des orifices de passage de gaz 21, l'aire de ces orifices 22 est de taille croissante suivant le sens de rotation α.

A titre d'exemple, ces orifices sont circulaires et ont une aire en forme de disque variable suivant une progression croissante dans le sens de rotation α.

De même, la rainure 23 est disposée suivant un arc de cercle sur la portion en forme de disque 20a de la pièce de régulation 20. La taille de cette rainure 23 est croissante suivant le même sens de rotation α de la pièce de régulation 20.

Ici, à titre d'exemple non limitatif, la rainure 23 s'étend sur un secteur angulaire de la portion en forme de disque 20a compris sensiblement entre 160 et 180°.

Comme bien illustré à la figure 4, la largeur de la rainure 23 suivant le diamètre de la portion sensiblement en forme de disque 20a est croissante dans le sens de rotation α.

En pratique, la rainure 23 est définie par deux portions de courbe dont les diamètres respectifs R1 et R2 varient en fonction de la position angulaire de la pièce de régulation 20.

Ainsi, en fonction de la position angulaire de la pièce de régulation 20 en regard de la paroi plane 15a et, plus particulièrement, de la position des orifices 22 ou de la rainure 23 en regard des orifices de passage de gaz 21, la section de passage de gaz varie selon une progression sensiblement parabolique dans le sens de rotation α de la pièce de régulation 20.

Cette section de passage de gaz varie ainsi sur une plage de rotation de la pièce de régulation 20 au moins égale à 270°.

Dans l'exemple décrit précédemment, la section de passage de gaz varie selon une progression parabolique selon une plage de rotation pouvant atteindre 320°.

La série d'orifices 22 est destinée à obtenir les faibles débits de gaz dans le robinet et la rainure 23 permet d'obtenir des débits plus élevés.

En particulier, la taille et la disposition des orifices 22 sont telles qu'elles permettent une progression continue du débit de gaz lors de la rotation de la pièce de régulation.

Ainsi, la distance séparant les orifices 22 est strictement inférieure au diamètre des orifices de passage 21 pour autoriser en continu le passage du gaz.

Afin de faciliter le positionnement de cette pièce de régulation 20 dans la chambre de passage de gaz 15, celle-ci comporte des oreillettes 24, par exemple au nombre de 3, disposées à 120° les unes des autres, permettant d'améliorer le centrage de la pièce de régulation 20 dans la chambre 15.

Cette pièce de régulation 20 est adaptée à être montée dans la chambre de passage de gaz 15 en association avec un cône d'étanchéité 30 adapté à se déplacer en rotation dans une portion tronconique 15c de la chambre de passage de gaz 15.

Ce cône d'étanchéité 30 permet, en fonction de sa position angulaire, d'obturer un orifice de sortie de gaz 25 du passage de gaz 15 reliant la chambre de passage de gaz 15 à la canalisation de sortie 14.

Ce cône d'étanchéité permet également d'éviter le passage de gaz à l'arrière de l'orifice de sortie de gaz 25, en direction du moteur 16.

Afin d'indexer en rotation la pièce de régulation 20 et le cône d'étanchéité 30 tous deux montés en rotation sur un axe de sortie du moteur 16, la pièce de régulation comporte comme bien illustré à la figure 3 un méplat 26 adapté à coopérer avec un logement de forme complémentaire prévu dans une face avant du cône d'étanchéité 30 disposé en vis-à-vis de la pièce de régulation 20.

Par ailleurs, afin de réaliser l'assemblage serré en position du cône d'étanchéité 30 et de la pièce de régulation 20 dans l'axe de la chambre de passage de gaz 15, il est nécessaire de prévoir des ressorts.

En particulier, un premier ressort 27 est monté sur l'axe du moteur entre le moteur et le cône d'étanchéité 30, permettant ainsi d'assurer un contact permanent de ce cône d'étanchéité 30 avec la portion tronconique 15c de la chambre de passage de gaz 15.

En outre, un second ressort 28 s'étend entre le cône d'étanchéité et la pièce de régulation 20 afin d'assurer un contact permanent de cette pièce de régulation 20 et notamment de sa face avant 20a avec la paroi plane 15a du robinet.

Ainsi, on limite les fuites de gaz entre ces deux pièces et on obtient une bonne précision sur le débit de gaz s'écoulant entre les orifices d'arrivée de gaz 21 et les passages de gaz 22, 23 ménagés dans la pièce de régulation 20.

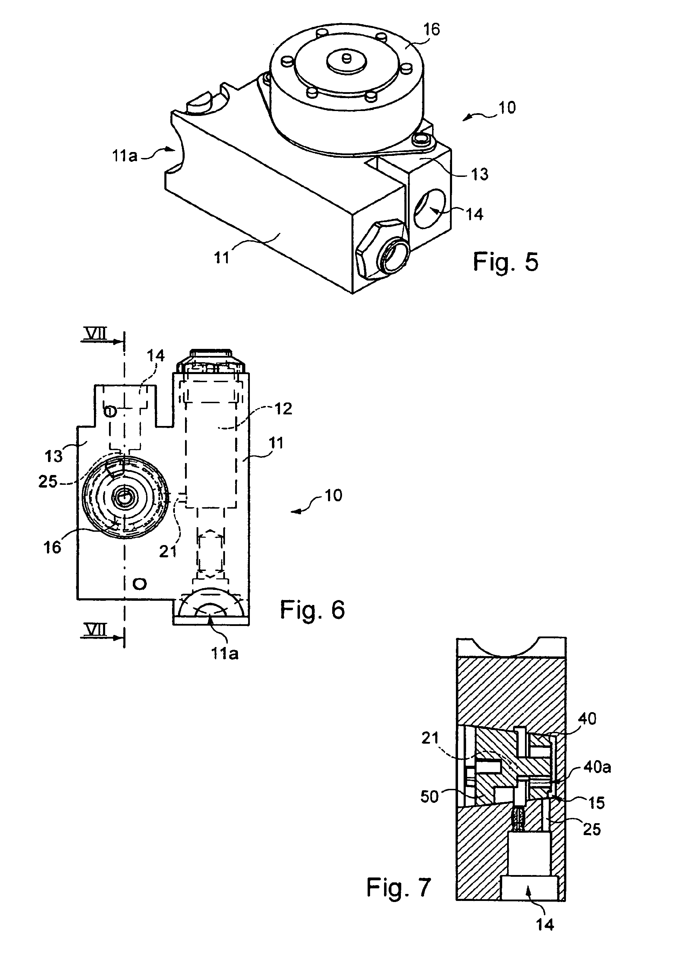

On va décrire à présent en référence aux figures 5 à 9 un second mode de réalisation de l'invention.

Dans ce mode de réalisation, les éléments analogues à ceux décrits en référence aux figures 1 et 4 portent les mêmes références et n'ont pas besoin d'être redécrits en détails ici.

Dans ce mode de réalisation, la chambre de passage de gaz 15 est de forme tronconique, un orifice d'arrivée de gaz 21 et un orifice de sortie de gaz 25 étant raccordés respectivement aux canalisations d'arrivée et de sortie de gaz du robinet et disposés dans la paroi tronconique de la chambre de passage de gaz 15.

Comme bien illustré sur les figures 7 à 9, la pièce de régulation 40 est ici de forme tronconique de telle sorte qu'elle est adaptée à venir en contact cône contre cône avec la paroi tronconique de la chambre de passage de gaz 15.

Une face d'extrémité 40a de la pièce de régulation 40 présente une forme d'hélicoïde par rapport à l'axe Z de rotation de la pièce de régulation 10. L'arête du tronc de cône au niveau de cette face d'extrémité 40a s'étend comme bien illustré à la figure 7 en regard de l'orifice de passage de gaz 25.

Ainsi, dans ce mode de réalisation, les moyens de passage de gaz définis dans la pièce de régulation coopèrent avec un orifice de passage de gaz correspondant à un orifice de sortie de gaz 25 de la chambre de passage de gaz 15.

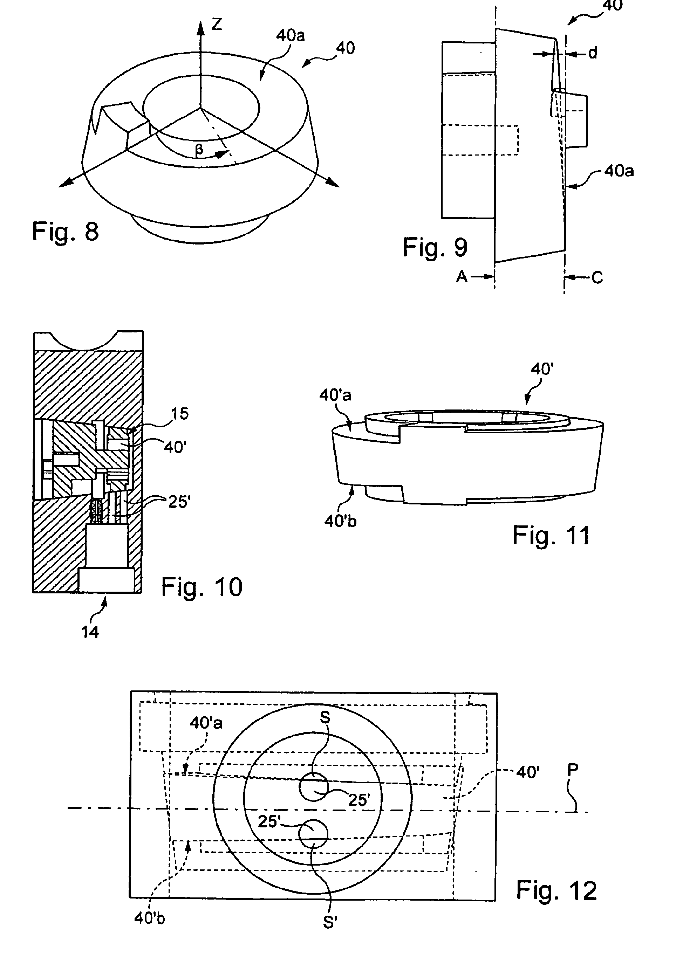

En pratique, la forme d'hélicoïde de la face 40a de la pièce de régulation 40 est définie de telle sorte que la hauteur d du cône varie en fonction de l'angle β tel qu'illustré aux figures 8 et 9 selon une variation parabolique.

Ainsi à titre d'exemple non limitatif, pour β variant de 0 à 330°, la hauteur d peut varier selon la formule suivante, à partir d'un plan de référence C tangent à la face d'extrémité 40a au niveau du point le plus éloigné de la base A de la pièce de régulation tronconique 40 :

$$d = -1,01x(\frac{\beta}{330})^2$$

Ainsi, en fonction de la position angulaire de la pièce de régulation 40, la section de passage de gaz définie entre l'orifice de passage de gaz 25 et le passage de hauteur d ménagé dans la hauteur du tronc de cône de la pièce de régulation 40, est variable selon une progression parabolique.

Dans ce mode de réalisation, cette progression parabolique s'étend sur une plage de rotation de la pièce de régulation 40 de 330°.

Comme dans le mode de réalisation précédent, cette pièce de régulation 40 peut être associée à un cône d'étanchéité 50 disposé dans la chambre 15 et également de forme tronconique permettant d'assurer l'étanchéité vis-à-vis du moteur 16 destiné à entraîner en rotation de manière synchronisée le cône d'étanchéité 50 et la pièce de régulation 40.

L'orifice d'arrivée de gaz 21 sétend ainsi dans une portion de la paroi tronconique de la chambre de passage de gaz 15 correspondant au logement du cône d'étanchéité 50. En fonction de la position de ce cône d'étanchéité 50, il est possible d'obturer ou d'ouvrir cet orifice de passage de gaz, permettant ainsi l'arrivée du gaz dans la chambre de passage de gaz 15.

Par ailleurs, afin d'améliorer la précision de la régulation et de s'affranchir des éventuels jeux liés au montage de la pièce de régulation 40 dans la chambre de passage de gaz 15, il est possible de prévoir deux orifices de passage de gaz agencés dans la paroi de la chambre de passage de gaz 15 destinés à venir en regard avec les moyens de passage de gaz prévus sur la pièce de régulation 40.

Comme bien illustré sur les figures 10 à 12, la chambre de passage de gaz 5 peut comporter ainsi deux orifices de sortie de gaz 25'.

Ces orifices de passage de gaz 25' sont ainsi prévus dans la paroi tronconique de la chambre de passage de gaz 15 et correspondent aux orifices de sortie de gaz en direction d'un brûleur.

Dans ce mode de réalisation, la pièce de régulation 40' de forme tronconique comporte alors deux faces d'extrémité 40'a, 40'b ayant chacune une forme d'hélicoïde disposées symétriquement par rapport un plan transversal P de la pièce de régulation 40' de forme tronconique.

L'arête de chacune de ces faces d'extrémité 40'a, 40'b est adaptée à s'étendre en regard respectivement d'un des orifices de passage de gaz 25' comme bien illustré à la figure 12.

Ainsi, la section de passage de gaz est variable et définie par les parties non obturées (référencées s et s' à la figure 12) des orifices de passage de gaz 25'.

Ainsi en cas de décalage du positionnement de la pièce de régulation 40' dans la portion tronconique de la chambre de passage de gaz 15, selon une direction perpendiculaire au plan transversal P de la pièce de régulation 40', le débit de gaz reste sensiblement inchangé dès lors que les sections de passage de gaz s, s' se compensent l'une l'autre.

Dans les modes de réalisation décrits précédemment, grâce à la variation de la section de passage selon une progression parabolique du gaz, on obtient des courbes de débit en fonction de la position angulaire de la pièce de régulation sensiblement paraboliques. Cette courbe est obtenue pour des positions angulaires de la pièce de régulation comprises typiquement entre 0 et 330°.

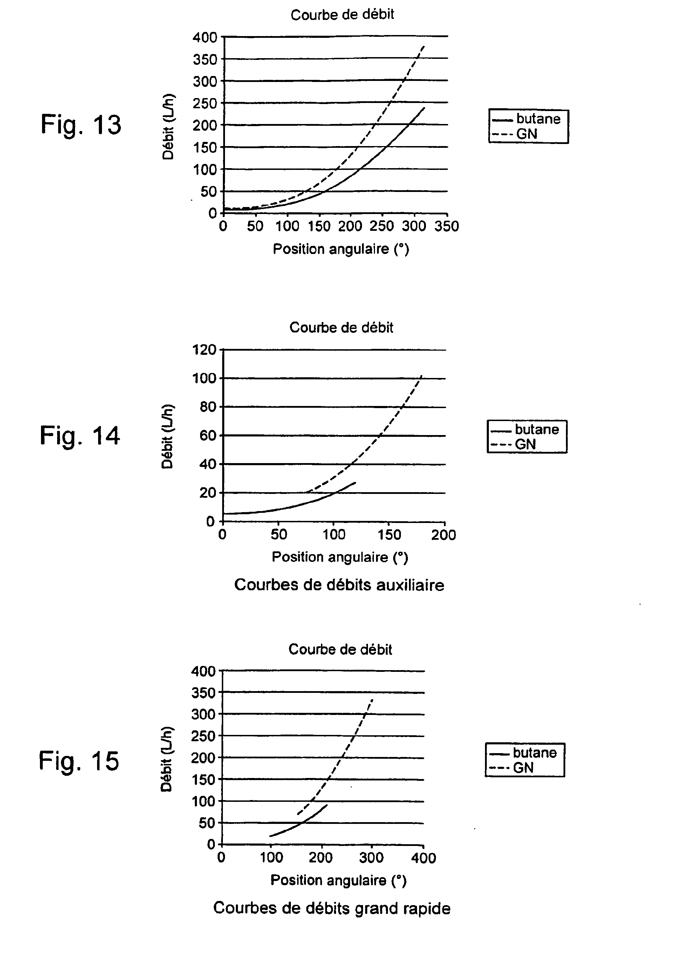

Ainsi, à la figure 13, on a illustré la progression du débit de gaz (en litre/heure) en fonction de la position angulaire de la pièce de régulation 20, 40, 40'. La courbe en trait plein correspond à un gaz du type butane et la courbe en trait mixte correspond à du gaz naturel.

Comme bien illustré à la figure 14, pour les faibles débits, inférieurs à 120 l/h, la plage de fonctionnement du robinet est au moins égale à 110°, avec une progression relativement régulière.

Il est ainsi possible pour les petits brûleurs d'obtenir différentes positions bien distinctes de débit dans une plage de fonctionnement relativement grande, permettant ainsi d'obtenir des flammes bien distinctes pour chaque brûleur.

De même, pour les débits plus importants de l'ordre de 200 à 400 1/h, comme illustré à la figure 15, la progression parabolique de la courbe de débit permet également d'obtenir sur une plage de fonctionnement supérieure à 110° une progression régulière et ainsi différentes tailles de flamme distinctes.

Ainsi, il est possible lors du passage entre différentes positions du robinet de gaz, et ainsi de la pièce de régulation montée en rotation, de distinguer clairement des variations de la taille de la flamme au niveau du brûleur pour chaque pas de rotation du moteur 16.

En effet, comme indiqué précédemment, chaque pas de déplacement du moteur correspond sensiblement à une rotation angulaire de 7,5°.

Sur une plage de rotation de l'ordre de 110°, il est possible facilement d'obtenir plusieurs puissances de cuisson différentes et par exemple, à titre d'exemple, neuf puissances de cuisson différentes.

Cette régulation de puissance peut être obtenue aussi bien pour les faibles débits que pour les débits importants grâce à cette progression parabolique de la section de passage de gaz, c'est-à-dire relativement faible pour les faibles débits et rapide pour les débits plus importants de gaz.

Par ailleurs, il est possible d'avoir des corps de robinet identiques quel que soit le brûleur utilisé. Le même corps de robinet et la même pièce de régulation peuvent être utilisés pour des brûleurs grand rapide ou des brûleurs à débits auxiliaires, seule la course en rotation de la pièce de régulation étant limitée différemment suivant le débit de gaz souhaité.

Bien entendu, le sens de circulation de gaz dans les robinets décrits précédemment peut être inversé avec interversion des orifices d'arrivée et de sortie de gaz.

Sur une plage de rotation de l'ordre de 110°, il est possible facilement d'obtenir plusieurs puissances de cuisson différentes et par exemple, à titre d'exemple, neuf puissances de cuisson différentes.

Cette régulation de puissance peut être obtenue aussi bien pour les faibles débits que pour les débits importants grâce à cette progression parabolique de la section de passage de gaz, c'est-à-dire relativement faible pour les faibles débits et rapide pour les débits plus importants de gaz.

Par ailleurs, il est possible d'avoir des corps de robinet identiques quel que soit le brûleur utilisé. Le même corps de robinet et la même pièce de régulation peuvent être utilisés pour des brûleurs grand rapide ou des brûleurs à débits auxiliaires, seule la course en rotation de la pièce de régulation étant limitée différemment suivant le débit de gaz souhaité.

Bien entendu, le sens de circulation de gaz dans les robinets décrits précédemment peut être inversé avec interversion des orifices d'arrivée et de sortie de gaz.

## Revendications

1. Robinet d'alimentation en gaz comprenant un corps (10) de robinet comportant une chambre de passage de gaz (15) entre une canalisation d'arrivée de gaz (11a) et une canalisation de sortie de gaz (14) et une pièce de régulation (20, 40, 40') du débit de gaz montée en rotation dans ladite chambre de passage de gaz (15) en regard d'au moins un orifice de passage de gaz (21, 25, 25'), ladite pièce de régulation (20, 40, 40') comportant des moyens de passage de gaz (22, 23, 40a, 40'a, 40'b) destinés à venir en vis-à-vis dudit au moins un orifice de passage de gaz (21, 25, 25') de ladite chambre (15), lesdits moyens de passage de gaz définissant avec ledit au moins un orifice de passage de gaz une section (s, s') de passage de gaz variable selon une progression continue sur une plage de rotation de ladite pièce de régulation (20, 40, 40'), **caractérisé en ce que** ladite section (s, s') de passage de gaz est variable selon une progression sensiblement parabolique sur une plage de rotation de ladite pièce de régulation (20, 40, 40') d'au moins 270°.

2. Robinet d'alimentation en gaz conforme à la revendication 1, **caractérisé en ce que** lesdits moyens de passage de gaz (40'a, 40'b) sont adaptés à être disposés en regard d'au moins deux orifices de passage de gaz (25') agencés dans une paroi de ladite chambre de passage de gaz (15).

**3.** Robinet d'alimentation en gaz conforme à l'une des revendications 1 ou 2, **caractérisé en ce que** ladite pièce de régulation (20) comporte une portion (20a) sensiblement en forme de disque destinée à venir en contact plan contre plan avec une paroi plane (15a) de ladite chambre de passage de gaz (15) pourvue d'au moins un orifice de passage de gaz (21), ladite portion sensiblement en forme de disque (20a) comprenant une série d'orifices (22) disposés suivant un arc de cercle et de taille croissante suivant un sens de rotation (α) et une rainure (23) disposée suivant un arc de cercle et de taille croissante suivant ledit sens de rotation (α), ladite série d'orifices (22) et ladite rainure (23) étant adaptées à venir en vis-à-vis dudit au moins un orifice de passage de gaz (21) en fonction de la position angulaire de ladite pièce de régulation (20).

**4.** Robinet d'alimentation en gaz conforme à la revendication 3, **caractérisé en ce que** ladite série d'orifices (22) s'étend sur un secteur angulaire de ladite portion en forme de disque (20a) compris sensiblement entre 130 et 140°, l'aire desdits orifices (22) étant croissante suivant ledit sens de rotation (α).

**5.** Robinet d'alimentation en gaz conforme à l'une des revendications 3 ou 4, **caractérisé en ce que** ladite rainure (23) s'étend sur un secteur angulaire de ladite portion en forme de disque (20a) compris sensiblement entre 160 et 180°, la largeur de ladite rainure (23) suivant le diamètre de ladite portion sensiblement en forme de disque (20a) étant croissante suivant ledit sens de rotation (α).

**6.** Robinet d'alimentation en gaz conforme à l'une des revendications 3 à 5, **caractérisé en ce que** ledit au moins un orifice de passage de gaz (21) prévu dans la paroi plane (15a) de ladite chambre de passage de gaz (15) est un orifice d'arrivée de gaz (21).

**7.** Robinet d'alimentation en gaz conforme à l'une des revendications 1 ou 2, **caractérisé en ce que** ladite pièce de régulation (40, 40') est de forme tronconique et adaptée à venir en contact cône contre cône avec une paroi tronconique de ladite chambre de passage de gaz (15) pourvue d'au moins un orifice de passage de gaz (25, 25'), au moins une face d'extrémité (40a, 40'a, 40'b) de ladite pièce de régulation de forme tronconique (40, 40') présentant une forme d'hélicoïde par rapport à un axe de rotation (Z) de ladite pièce de régulation (40, 40') et l'arête du tronc de cône au niveau de la face d'extrémité (40a, 40'a, 40'b) s'étendant en regard d'au moins un orifice de passage de gaz (25, 25').

**8.** Robinet d'alimentation en gaz conforme à la revendication 7, **caractérisé en ce que** ladite paroi tronconique de la chambre de passage de gaz (15) comporte deux orifices de passage de gaz (25, 25'), ladite pièce de régulation de forme tronconique (40') comportant deux faces d'extrémité (40'a, 40'b) en forme d'hélicoïde disposées symétriquement par rapport à un plan transversal (P) de ladite pièce de régulation de forme tronconique (40') et l'arête desdites faces d'extrémité (40'a, 40'b) étant adaptée à s'étendre en regard respectivement d'un desdits deux orifices de passage de gaz (25').

**9.** Robinet d'alimentation en gaz conforme à l'une des revendications 7 ou 8, **caractérisé en ce que** lesdits orifices de passage de gaz (26, 25') prévus dans la paroi tronconique de ladite chambre de passage de gaz (15) sont des orifices de sortie de gaz (25, 25') en direction d'un brûleur.

**Claims**

**1.** Gas supply tap comprising a tap body (10) comprising a gas passage chamber (15) between a gas inlet pipe (11a) and a gas outlet pipe (14), and a part (20, 40, 40') for regulating the flow of gas mounted rotatably in the said gas passage chamber (15) opposite at least one gas passage orifice (21, 25, 25'), the said regulation part (20, 40, 40') comprising gas passage means (22, 23, 40a, 40'a, 40'b) intended to come opposite the said at least one gas passage orifice (21, 25, 25') in the said chamber (15), the said gas passage means defining, with the said at least one gas passage orifice, a gas passage cross section (s, s') variable according to a continuous progression over a rotation range of the said regulation part (20, 40, 40'), **characterised in that** the said gas passage cross section (s, s') is variable according to a substantially parabolic progression over a rotation range of the said regulation part (20, 40, 40') of at least 270°.

**2.** Gas supply tap according to claim 1, **characterised in that** the said gas passage means (40'a, 40'b) are adapted to be disposed opposite at least two gas passage orifices (25') arranged in a wall of the said gas passage chamber (15).

**3.** Gas supply tap according to one of claims 1 or 2, **characterised in that** the said regulation part (20) comprises a portion (20a) substantially in the form of a disc intended to come into flat-against-flat contact with a flat wall (15a) of the said gas passage chamber (15) provided with at least one gas passage orifice (21), the said substantially disc-shaped portion (20a) comprising a series of orifices (22) arranged in an arc of a circle and of increasing size in a direction of rotation (α) and a groove (23) arranged in an arc of a circle and of increasing size in the said direction of rotation (α), the said series of orifices (22) and the said groove (23) being adapted to come opposite the said at least one gas passage orifice (21) according to the angular position of the said regulation part (20).

4.  Gas supply tap according to claim 3, **characterised in that** the said series of orifices (22) extends over an angular sector of the said disc-shaped portion (20a) lying substantially between 130° and 140°, the area of the said orifices (22) increasing in the said direction of rotation (α).

5.  Gas supply tap according to one of claims 3 or 4, **characterised in that** the said groove (23) extends over an angular sector of the said disc-shaped portion (20a) lying substantially between 160° and 180°, the width of the said groove (23) along the diameter of the said substantially disc-shaped portion (20a) increasing in the said direction of rotation (α).

6.  Gas supply tap according to one of claims 3 to 5, **characterised in that** the said at least one gas passage orifice (21) provided in the flat wall (15a) of the said gas passage chamber (15) is a gas inlet orifice (21).

7.  Gas supply tap according to one of claims 1 or 2, **characterised in that** the said regulation part (40, 40') is frustoconical in shape and adapted to come into cone-against-cone contact with a frustoconical wall of the said gas passage chamber (15) provided with at least one gas passage orifice (25, 25'), at least one end face (40a, 40'a, 40'b) of the said frustoconically shaped regulation part (40, 40') having a helical shape with respect to a rotation axis (z) of the said regulation part (40, 40') and the edge of the truncated cone at the end face (40a, 40'a, 40'b) extending opposite at least one gas passage orifice (25, 25').

8.  Gas supply tap according to claim 7, **characterised in that** the said frustoconical wall of the gas passage chamber (15) comprises two gas passage orifices (25, 25'), the said frustoconically shaped regulation part (40') comprising two end faces (40'a, 40'b) in helicoid shape disposed symmetrically with respect to a transverse plane (P) of the said frustoconically shaped regulation part (40') and the edge of the said end faces (40'a, 40'b) being adapted to extend opposite respectively one of the said two gas passage orifices (25').

9.  Gas supply tap according to one of claims 7 or 8, **characterised in that** the said gas passage orifices (25, 25') provided in the frustoconical wall of the said gas passage chamber (15) are gas outlet orifices (25, 25') in the direction of a burner.

**Patentansprüche**

1.  Gaszufuhrhahn mit einem Hahnkörper (10), der eine Gasdurchlasskammer (15) zwischen einer Gaszuführungsleitung (11a) und einer Gasauslassleitung (14) und ein Teil (20, 40, 40') zur Regulierung des Gasdurchflusses aufweist, das drehbar in der Gasdurchlasskammer (15) gegenüber mindestens einer Gasdurchlassöffnung (21, 25, 25') angebracht ist, wobei das Regulierungsteil (20, 40, 40') Gasdurchlassmittel (22, 23, 40a, 40'a, 40'b) aufweist, die dazu vorgesehen sind, gegenüber der mindestens einen Gasdurchlassöffnung (21, 25, 25') der Kammer (15) zu gelangen, wobei die Gasdurchlassmittel mit der mindestens einen Gasdurchlassöffnung einen Gasdurchlassquerschnitt (s, s') definieren, der kontinuierlich über einen Drehbereich des Regulierungsteils (20, 40, 40') variabel ist, **dadurch gekennzeichnet, dass** der Gasdurchlassquerschnitt (s, s') im Wesentlichen parabolisch über einen Drehbereich des Regulierungsteils (20, 40, 40') von mindestens 270° variabel ist.

2.  Gaszufuhrhahn nach Anspruch 1, **dadurch gekennzeichnet, dass** die Gasdurchlassmittel (40'a, 40'b) dazu geeignet sind, gegenüber von mindestens zwei Gasdurchlassöffnungen (25') angeordnet zu sein, die in einer Wand der Gasdurchlasskammer (15) ausgebildet sind.

3.  Gaszufuhrhahn nach einem der Ansprüche 1 oder 2, **dadurch gekennzeichnet, dass** das Regulierungsteil (20) einen im Wesentlichen scheibenförmigen Abschnitt (20a) aufweist, der dazu vorgesehen ist, mit einer flachen Wand (15a) der Gasdurchlasskammer (15), die mit mindestens einer Gasdurchlassöffnung (21) versehen ist, Fläche an Fläche in Kontakt zu gelangen, wobei der im Wesentlichen scheibenförmige Abschnitt (20a) eine Reihe von Öffnungen (22), die kreisbogenförmig angeordnet sind und in einer Drehrichtung (α) zunehmend größer werden, und eine Nut (23) aufweist, die kreisbogenförmig angeordnet ist und in Drehrichtung (α) zunehmend größer wird, wobei die Reihe Öffnungen (22) und die Nut (23) dazu geeignet sind, in Abhängigkeit von der Winkelstellung des Regulierungsteils (20) gegenüber mindestens einer Gasdurchlassöffnung (21) zu gelangen.

4.  Gaszufuhrhahn nach Anspruch 3, **dadurch gekennzeichnet, dass** sich die Reihe Öffnungen (22) über einen Winkelsektor des scheibenförmigen Abschnitts (20a) erstreckt, der im Wesentlichen zwischen 130 und 140° beträgt, wobei die Fläche der Öffnungen (22) in Drehrichtung (α) zunimmt.

5.  Gaszufuhrhahn nach einem der Ansprüche 3 oder 4, **dadurch gekennzeichnet, dass** sich die Nut (23) über einen Winkelsektor des scheibenförmigen Abschnitts (20a) erstreckt, der im Wesentlichen zwischen 160 und 180° beträgt, wobei die Breite der Nut (23) entlang dem Durchmesser des im Wesentlichen scheibenförmigen Abschnitts (20a) in Drehrichtung ($\alpha$) zunimmt.

6. Gaszufuhrhahn nach einem der Ansprüche 3 bis 5, **dadurch gekennzeichnet, dass** die mindestens eine Gasdurchlassöffnung (21), die in der flachen Wand (15a) der Gasdurchlasskammer (15) vorgesehen ist, eine Gaszuführungsöffnung (21) ist.

7. Gaszufuhrhahn nach einem der Ansprüche 1 oder 2, **dadurch gekennzeichnet, dass** das Regulierungsteil (40, 40') kegelstumpfartig und dazu geeignet ist, mit einer kegelstumpfartigen Wand der Gasdurchlasskammer (15), die mit mindestens einer Gasdurchlassöffnung (25, 25') versehen ist, Kegel an Kegel in Kontakt zu gelangen, wobei mindestens eine Stirnfläche (40a, 40'a, 40'b) des kegelstumpfartigen Regulierungsteils (40, 40') in Bezug auf eine Drehachse (Z) des Regulierungsteils (40, 40') spiralförmig ist und die Kante des Kegelstumpfes auf Höhe der Stirnfläche (40a, 40'a, 40'b) sich gegenüber mindestens einer Gasdurchlassöffnung (25, 25') erstreckt.

8. Gaszufuhrhahn nach Anspruch 7, **dadurch gekennzeichnet, dass** die kegelstumpfartige Wand der Gasdurchlasskammer (15) zwei Gasdurchlassöffnungen (25, 25') aufweist, wobei das kegelstumpfartige Regulierungsteil (40') zwei spiralförmige Stirnflächen (40'a, 40'b) aufweist, die in Bezug auf eine Querebene (P) des kegelstumpfartigen Regulierungsteils (40') symmetrisch angeordnet sind, und die Kante der Stirnflächen (40'a, 40'b) dazu geeignet ist, sich jeweils gegenüber einer der beiden Gasdurchlassöffnungen (25') zu erstrecken.

9. Gaszufuhrhahn nach einem der Ansprüche 7 oder 8, **dadurch gekennzeichnet, dass** die Gasdurchlassöffnungen (25, 25'), die in der kegelstumpfartigen Wand der Gasdurchlasskammer (15) vorgesehen sind, Öffnungen (25, 25') für den Austritt von Gas zu einem Brenner hin sind.

Fig. 1

Fig. 3

Fig. 4

Fig. 2

Fig. 5

Fig. 6

Fig. 7

Fig. 8

Fig. 9

Fig. 10

Fig. 11

Fig. 12

Courbe de débit

Fig. 13

Position angulaire (°)

Courbe de débit

Fig. 14

Position angulaire (°)

Courbes de débits auxiliaire

Courbe de débit

Fig. 15

Position angulaire (°)

Courbes de débits grand rapide

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4137945 A
- WO 0133118 A
- JP 5507622 B
- EP 1094276 A